# FASCICULE DE BREVET EUROPEEN

(11) **EP 2 505 429 B1**
(45) Date de publication et mention de la délivrance du brevet: **04.06.2014**
(21) Numéro de dépôt: 12168972.3
(22) Date de dépôt: 16.06.2009
(51) Int. Cl.: B60P 1/64, B60P 3/40, B62B 5/00

(54) **Procédé pour régler l'empattement d'un ensemble roulant comprenant au moins deux dispositifs de manutention-roulage**
Verfahren zur Regulierung des Achsabstands einer rollenden Einheit, die mindestens zwei Fördervorrichtungen für Container umfasst
Method for adjusting the wheelbase of a wheel-mounted assembly comprising at least two handling devices for containers

(30) Priorité: 16.06.2008 FR 0853969
(43) Date de publication de la demande: 03.10.2012
(62) Demande divisionnaire de: 09766083.1
(73) Titulaire: Toutenkamion, 45270 Ladon (FR)
(72) Inventeur: Girerd, Marc, 45270 VILLEMOUTIERS (FR); Petitimbert, Patrice, 45700 SAINT MAURICE SUR FESSARD (FR)
(74) Mandataire: Pontet Allano & Associes

(56) Documents cités:
- EP-A- 0 243 276
- GB-A- 2 149 003
- US-A- 3 631 999

## Description

La présente invention concerne un procédé pour régler l'empattement d'un ensemble roulant composé d'au moins deux dispositifs de manutention roulage, du genre capable de transformer un conteneur ou analogue en véhicule, en particulier en remorque routière.

On connaît des dispositifs de manutention-roulage composés de deux éléments présentant des moyens d'accrochage permettant de lever un conteneur, et des éléments roulants permettant le déplacement dudit conteneur.

Le document US 3,497,231 décrit un dispositif de manutention-roulage permettant de lever sur roues un conteneur afin de constituer un ensemble roulant à quatre roues destiné à être tracté par un véhicule.

Le document EP 0 243 276 A1 propose de soulever sur roues un conteneur par ses deux extrémités, au moyen de deux dispositifs de manutention-roulage, pour constituer une remorque. En plaçant les roues sous le conteneur et non au delà de ses extrémités, le dispositif présente l'avantage de ne pas transmettre tous les efforts de la route à la fixation entre le dispositif et le conteneur, réduisant ainsi les contraintes en flexion exercées sur le conteneur et offrant un empattement plus court facilitant les manoeuvres lors des opérations de chargement-déchargement. Le dispositif permet également par un réglage d'angle lors des manoeuvres, de régler distinctement pour chaque élément la hauteur du côté du conteneur soulevé afin de permettre le chargement déchargement d'un véhicule tel qu'un avion cargo.

Ces différentes solutions présentent l'avantage de permettre la manoeuvre et/ou le transport de conteneurs dans des cas où l'outillage classique est inadapté et/ou en dehors des infrastructures spécialisées.

Les US-A-4 231 709, GB-A-2 149 003, US-A-3 631 999, US-A-3 156 484, US-A-3 243 193 et US-A-3 392 857 enseignent de raccorder ensemble deux dispositifs de manutention roulage pour le retour à vide.

Toutefois il existe différentes tailles de conteneurs et les solutions connues présentent l'inconvénient que l'empattement de l'ensemble roulant réalisé dépend de la longueur du conteneur.

Le but de la présente invention est de remédier à cet inconvénient.

Suivant un premier aspect de l'invention, le procédé pour régler l'empattement d'un ensemble roulant composé d'au moins deux dispositifs de manutention roulage, chaque dispositif comportant un châssis, et un chariot mobile sur le châssis et associable avec une extrémité d'un conteneur pour former une remorque routière, **caractérisé en ce que** l'on fait coulisser le chariot d'au moins un des dispositifs de manutention roulage le long du châssis de ce dispositif jusqu'à une position déterminée.

L'invention permet de régler l'empattement entre les positions extrêmes du chariot. Toutefois elle est également applicable à tout réglage du chariot dans une position intermédiaire entre une position proximale et une position distale, pour permettre le réglage de l'empattement de la remorque avec ou sans conteneur, permettant à la remorque: de s'adapter à différentes réglementations locales; de s'adapter à différentes longueurs de conteneur même non standard; d'être manoeuvrée plus facilement notamment en raccourcissant l'empattement; et d'évoluer sur tous types de terrain même accidenté y compris sur terrain privé en dehors de la législation routière, le raccourcissement de l'empattement permettant notamment de faciliter le franchissement d'obstacle. Le réglage de l'empattement est obtenu en accouplant pour au moins l'un des dispositifs de manutention-roulage des vérins au chariot et en déplaçant le chariot.

L'invention est applicable dans une version où, en l'absence de conteneur, on réalise un ensemble roulant sans conteneur en accouplant deux dispositifs de manutention roulage à l'aide de moyens d'assemblage temporaires, et on règle l'empattement de cet ensemble roulant sans conteneur. Tous les réglages décrits ci-dessus pour la remorque routière avec conteneur sont alors applicables à l'ensemble roulant sans conteneur.

De préférence on fait coulisser le chariot sur le châssis parallèlement à la direction d'avancement, entre la position distale le long du châssis, dans laquelle les roues sont situées sous le conteneur, et la position proximale le long du châssis.

Selon un mode de réalisation particulier, on oriente, au moyen d'un vérin des moyens de couplage du dispositif de manutention roulage avec une extrémité du conteneur, par rapport au chariot autour d'un axe transversal à la direction d'avancement.

Dans un mode de réalisation avantageux on articule sélectivement une extrémité du vérin au chariot, ou au châssis, une autre extrémité du vérin étant articulée au chariot.

De préférence, dans une position déterminée du chariot, on actionne un dispositif d'accouplement variable permettant dans cette position du chariot, d'accoupler sélectivement ladite extrémité au vérin soit au chariot, soit au châssis.

Suivant une autre particularité avantageuse de l'invention, lorsque le vérin est accouplé au châssis on déplace le chariot pour soulever ou descendre un conteneur.

Suivant une autre particularité de l'invention, pour le réglage de l'empattement les deux extrémités du vérin sont accouplées au chariot et on fait coulisser le chariot sur le châssis à l'aide de moyens moteurs.

Suivant encore un autre aspect de l'invention, on règle l'empattement à une valeur correspondant à une portion intermédiaire du chariot entre ses portions proximales et distales.

De préférence le dispositif de manutention-roulage comprend un châssis monté sur roues et des moyens de couplage avec une extrémité d'un conteneur de façon à constituer une remorque routière lorsque l'autre extrémité du conteneur est associée à un dispositif similaire, **caractérisé en ce qu'**il comprend des moyens d'assemblage temporaire avec un autre dispositif de manutention-roulage pour constituer un ensemble roulant sans conteneur.

De préférence le dispositif de manutention-roulage permet en outre, grâce aux moyens d'assemblage temporaire avec un autre dispositif de manutention-roulage, de constituer un ensemble roulant sans conteneur. Les dispositifs peuvent ainsi être déplacés à vide par un véhicule tracteur sans nécessiter l'intervention d'appareillages extérieurs.

De préférence e dispositif de manutention-roulage permet ainsi de réaliser une noria de conteneurs ou analogues.

De préférence les moyens d'assemblage du dispositif de manutention-roulage et d'un dispositif essentiellement identique placés face à face, se complètent pour assembler les deux dispositifs et constituer l'ensemble roulant sans conteneur.

Cette complémentarité permet de limiter le coût de l'invention, tout en réduisant l'encombrement et la masse devant être transportée.

De préférence les moyens d'assemblage sont adaptés à former entre les deux dispositifs similaires au moins une partie d'une structure de liaison qui fixe les deux dispositifs en définissant un écartement entre eux. Il est ainsi possible de tracter, mais également de freiner l'ensemble formé, en n'agissant que sur l'un au moins des dispositifs de manutention-roulage.

De préférence la structure de liaison à une forme générale parallélépipédique, rendant ainsi la structure de liaison comparable à la géométrie des conteneurs pour lesquels le dispositif de manutention-roulage est adapté.

La structure de liaison est par exemple obtenue par l'utilisation sur chaque dispositif de manutention d'un cadre de liaison latéral définissant un côté du parallélépipède. Ce cadre est alors maintenu dans un plan défini, typiquement sensiblement vertical et parallèle à la direction d'avancement. Le côté opposé du parallélépipède est alors défini par le cadre de liaison latéral complémentaire du second dispositif de manutention en vis-à-vis.

Les moyens pour maintenir le cadre de liaison latéral dans le plan défini, typiquement parallèle à la direction d'avancement, peuvent comprendre un renfort d'angle permettant de fixer l'orientation du cadre de liaison relativement au châssis.

Outre ce renfort d'angle, le maintien du cadre de liaison est réalisé par une fixation sur un tablier qui, en tant que moyens de couplage du dispositif de manutention roulage au conteneur, peut être fixé contre une face d'extrémité du conteneur. Le tablier présente l'avantage de se fixer sur le conteneur de manière solide et rigide sans dégrader celui-ci ni nécessiter aucune modification du conteneur. De même, la fixation du cadre de liaison latéral au tablier permet d'exploiter ces qualités de solidité lors de l'assemblage avec un autre dispositif de manutention roulage.

Pour des raisons de praticité, la structure de liaison est de préférence escamotable, notamment en attachant le cadre latéral au tablier par une articulation autour de laquelle il peut pivoter entre une position déployée et une position repliée dans un plan transversal à la direction d'avancement.

Cette disposition présente l'avantage de ne nécessiter qu'un faible nombre de manoeuvres pour déployer et escamoter les moyens d'assemblage temporaires. De plus la disposition autorise un stockage et un transport aisé des moyens d'assemblage sur le dispositif de manutention-roulage. Enfin l'opérateur n'ayant pas à manipuler de charges lourdes et/ou encombrantes, l'utilisation de ces moyens d'assemblage est facilitée et peut être réalisée rapidement dans le cadre d'une noria de conteneurs notamment.

L'assemblage temporaire se faisant typiquement entre deux dispositifs similaires ou même sensiblement identiques, la partie de la structure de liaison qui est associée à un dispositif de manutention roulage comprend de préférence des moyens de fixation à une partie complémentaire de la structure de liaison, portée par l'autre dispositif de manutention-roulage, et des moyens de maintien de la partie complémentaire dans une position définie par rapport au châssis. Ces moyens de fixation et de maintien sont de préférence prévus symétriquement aux moyens de fixation et de maintien de la structure de liaison relativement au châssis, afin de renforcer et d'homogénéiser la rigidité de l'ensemble roulant ainsi formé.

Les moyens d'assemblage sont de préférence au moins partiellement combinés avec des moyens de couplage afin de réduire le nombre de pièces nécessaires pour constituer un ensemble roulant sans conteneur. Ces moyens sont de préférence montés sur un chariot qui coulisse sur le châssis parallèlement à la direction d'avancement. En pratique une telle combinaison consiste par exemple comme décrit plus haut, en ce que le tablier de couplage fait partie intégrante de la structure de liaison.

Pour effectuer la manutention d'un conteneur le dispositif est préférablement capable de s'incliner autour de l'axe des roues de sorte que le tablier soit adjacent au sol. L'invention prévoit pour cela de faire basculer le dispositif autour d'un axe d'essieu en déplaçant le chariot en direction du conteneur jusqu'à une position proximale afin notamment de déplacer le centre de gravité. Le dispositif repose alors sur son essieu ainsi que sur au moins une roulette permettant de positionner judicieusement le dispositif relativement au conteneur. Puis l'on procède au couplage du dispositif avec le conteneur.

A la suite de cela on fait coulisser le chariot le long du châssis. Le châssis étant incliné, cela a pour effet de lever le conteneur et de le faire coulisser sur le châssis. Ce positionnement relatif provoque un basculement du châssis sur ses roues. Lors de cette opération, l'angle formé par le conteneur et le châssis évolue jusqu'à ce que le conteneur soit posé sur le châssis, qui lui-même est devenu parallèle au sol. Cette variation d'angle est guidée par le tablier fixé sur le conteneur. Pour cela le tablier pivote autour de son axe d'articulation au chariot au fur et à mesure du mouvement de ce chariot. Pour cela le tablier est fixé, à distance du point de fixation au chariot, à un vérin dont l'autre extrémité est fixée sur le châssis. Le tablier, le vérin et la distance entre le point de fixation du tablier au chariot et le point de fixation du vérin au châssis permettent de former un triangle déformable. Cette géométrie présente l'avantage de faire progressivement évoluer l'angle du tablier relativement au châssis selon la position du chariot.

Un dispositif similaire effectue la même opération à l'autre extrémité du conteneur. Pendant le chargement sur les deux dispositifs, le conteneur reste suspendu entre les deux châssis montés chacun sur roues. A la fin du chargement le conteneur est posé sur les deux châssis.

Les moyens d'assemblage temporaire entre deux dispositifs permettant de lier rigidement les deux tabliers tel que décrit précédemment, leur manutention est comparable à celle d'un conteneur standardisé. A la différence que ces moyens d'assemblage sont de longueur moindre que les conteneurs standardisés, pour pouvoir être escamotés dans le tablier s'étendant suivant la largeur du conteneur. La mise en place des moyens d'assemblage temporaire se fera donc, une fois le conteneur déchargé, alors que les dispositifs sont en position basculée. Le déplacement des chariots permettra comme avec le conteneur standardisé de constituer une remorque dont l'empattement sera toutefois nettement réduit.

Bien qu'avantageux en terme de manoeuvrabilité, cet empattement court est incompatible avec une utilisation routière car il nuit à la stabilité de l'ensemble lors de vitesses élevées. Pour pallier cet inconvénient, l'invention prévoit donc de ramener ensuite le chariot dans une position distale dans laquelle les moyens de liaison entre les conteneurs sont entièrement situés au-dessus de l'empattement de l'ensemble roulant.

Cette position distale est atteinte en déplaçant le chariot en sens inverse du déplacement effectué précédemment. Lors de cette opération, l'angle du tablier relativement au châssis ne doit pas varier sous l'action de la géométrie en triangle déformable comme ce serait le cas pour un déchargement.

C'est pourquoi, alors que le chariot est en position proximale, correspondant au roulage avec conteneur, un accouplement variable permet d'articuler une extrémité du vérin non plus au châssis, mais désormais au chariot pour le roulage sans conteneur.

De manière préférentielle, l'accouplement variable comprend un coupleur coulissant entre deux positions extrêmes suivant un axe transversal à la direction d'avancement.

Lorsque le vérin est articulé au chariot, l'angle formé par le tablier et le chariot ne change pas lors du déplacement du chariot. L'invention présente alors l'avantage de permettre le réglage de l'empattement de l'ensemble roulant ainsi constitué afin de permettre une utilisation routière.

Les moyens de couplage sont de préférence orientables au moyen du vérin par rapport au chariot autour d'un axe transversal à la direction d'avancement. La variation de longueur du vérin permet l'orientation des moyens de couplage par pivotement du tablier relativement au châssis, facilitant ainsi l'accouplement du tablier avec le conteneur lors de la prise en charge de celui-ci, ainsi que pour assurer que la face inférieure du conteneur repose sur le châssis à la fin du chargement.

L'orientation des moyens de couplage présente l'avantage de permettre le couplage du dispositif au conteneur et/ou à un autre dispositif, même si l'opération se fait sur un terrain dont la surface n'est pas plane.

D'autres particularités et avantages de l'invention ressortiront encore de la description détaillée d'un mode de mise en oeuvre nullement limitatif, et des dessins annexés sur lesquels :
- la figure 1 est une vue en élévation d'un élément de manutention-roulage en position tricycle, en train d'être approché d'un conteneur ;
- la figure 2 est une vue analogue à la figure 1 mais montrant l'autre extrémité du conteneur pendant l'arrimage du conteneur ;
- figures 3 et 4 sont des vues analogues aux figures 1 et 2 respectivement, montrant respectivement le conteneur en cours de levage et le conteneur à en position de route sur le dispositif selon l'invention ;
- la figure 5 et une vue en perspective montrant deux dispositifs selon l'invention en train d'être approchés face à face en vue de la constitution d'un ensemble roulant sans conteneur ;
- les figures 6 à 10 sont des vues analogues à la figure 5 mais montrant respectivement les deux dispositifs en cours d'assemblage puis formant l'ensemble roulant sans conteneur ;
- les figures 11 et 12 sont des vues en perspective de l'accouplement variable entre le vérin, le châssis et le chariot, dans la position d'accouplement avec le châssis et respectivement dans la position d'accouplement avec le chariot ; et
- la figure 13 est une vue de dessous, schématique, illustrant les étapes successives du déploiement de la structure de liaison.

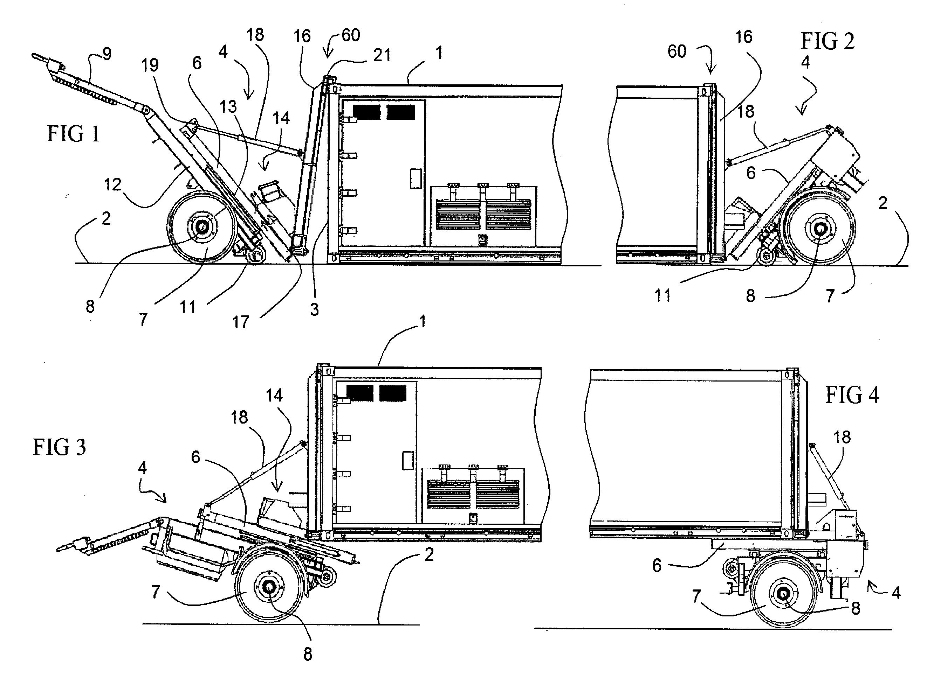

Dans l'exemple représenté aux figures 1 et 2, le conteneur 1 est un « shelter », c'est-à-dire un abri ou un local transportable. Il est posé sur le sol 2. On approche de chaque face d'extrémité 3 du conteneur 1, un dispositif de manutention roulage 4 comprenant un châssis 6 monté sur des roues 7 ayant un axe commun 8 de sorte que le châssis 6 peut pivoter par rapport au sol 2 autour d'un axe transversal à la direction d'avancement, notamment autour de l'axe 8 des roues 7, comme l'illustrent comparativement les figures 2, 3 et 4. Dans la suite, on qualifie de « proximale » le côté du dispositif ou tout composant qui est proche de la charge (conteneur 1) et « distal » le côté opposé. Les deux dispositifs 4 sont sensiblement identiques. Toutefois, le châssis 6 de l'un des dispositifs 4 porte les roues 7 par l'intermédiaire d'un sous-châssis 12 qui est articulé au châssis 6 au moyen d'une articulation 13 analogue à celle du train avant d'une remorque routière à quatre roues, pour permettre à ce train avant d'être directeur. Le châssis inférieur 12 porte à son extrémité distale une flèche d'attelage 9.

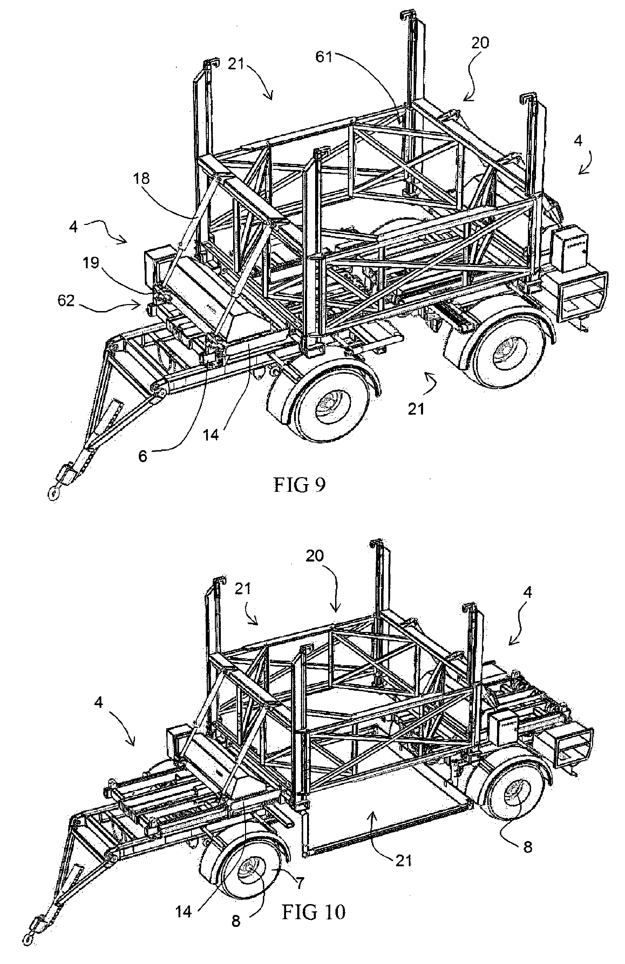

Sur chaque dispositif 4, un chariot 14 est monté coulissant par rapport au châssis 6 suivant une direction longitudinale du châssis. Le chariot 14 porte un tablier 16 qui s'étend dans un plan transversal à la direction d'avancement. Le bord inférieur du tablier 16 est articulé à un bord proximal du chariot 14 suivant un axe 17 qui est transversal relativement à la direction d'avancement. Une paire de vérins 18 (un seul est visible aux figures 1 et 2) dont l'extrémité proximale est articulée au tablier 16 à distance de l'axe 17 permet de régler l'inclinaison du tablier 16 autour de l'axe 17 par rapport au châssis 6. Des moyens moteurs 15 (Fig. 10), par exemple à vis et écrou, permettent de déplacer le chariot entre la position proximale représentée aux figures 1 et 2 (et 10), dans laquelle l'articulation 17 est adjacente à l'extrémité proximale du châssis 6, appropriée pour la prise en charge du conteneur 1 posé sur le sol, et une position distale, représentée à la figure 4, dans laquelle l'articulation 17 est éloignée de l'extrémité distale du châssis (Fig.4).

Pour la prise en charge d'un conteneur 1 par des moyens de couplage 60, l'extrémité distale 19 des vérins 18 est articulée à l'extrémité distale du châssis 6. Comme le montre la figure 1, on approche le dispositif 4 de façon que le tablier 16 soit sensiblement adjacent à la face d'extrémité 3 du conteneur 1. L'axe d'articulation 17 est très proche du sol 2, et le châssis 6 se trouve dans un plan incliné à environ 45° par rapport au sol 2. Cette position est définie par une roulette orientable 11 montée en dessous du châssis 6. On engage des crochets supérieurs 21 du tablier 16 dans des conformations correspondantes, normalisées, du conteneur 1. On règle ensuite la longueur des vérins 18 de façon que la base du tablier 16 vienne à son tour s'accoupler avec le bord inférieur du conteneur 1 de façon à réaliser la situation représentée à la figure 2.

Ensuite, comme représenté à la figure 3, on commande le déplacement du chariot 14 vers sa position distale tout en maintenant constante la longueur du vérin 18. Ceci provoque le pivotement du châssis 6 autour de l'axe 8 des roues 7. En même temps, les roues 7 roulent sur le sol 2 et le dispositif 4, en particulier son châssis 6, s'engage sous l'extrémité du conteneur 1. Le conteneur est de ce fait soulevé. À l'issue de cette étape, la situation représentée à la figure 4 est atteinte, après éventuellement un nouveau réglage de la longueur des vérins 18 pour que la face inférieure du conteneur repose sur le châssis 6. Le tablier 16 se trouve dans un plan vertical voisin de l'axe 8 des roues, et situé du côté distal de l'axe 8. Des opérations inverses de celles qui viennent d'être décrites permettent de dissocier le conteneur 1 du dispositif 4, et de le reposer sur le sol 2 ou sur des supports appropriés. Les figures 1 à 4 représentent la prise en charge simultanée des deux extrémités du conteneur 1, mais il est également possible de les prendre en charge l'une après l'autre.

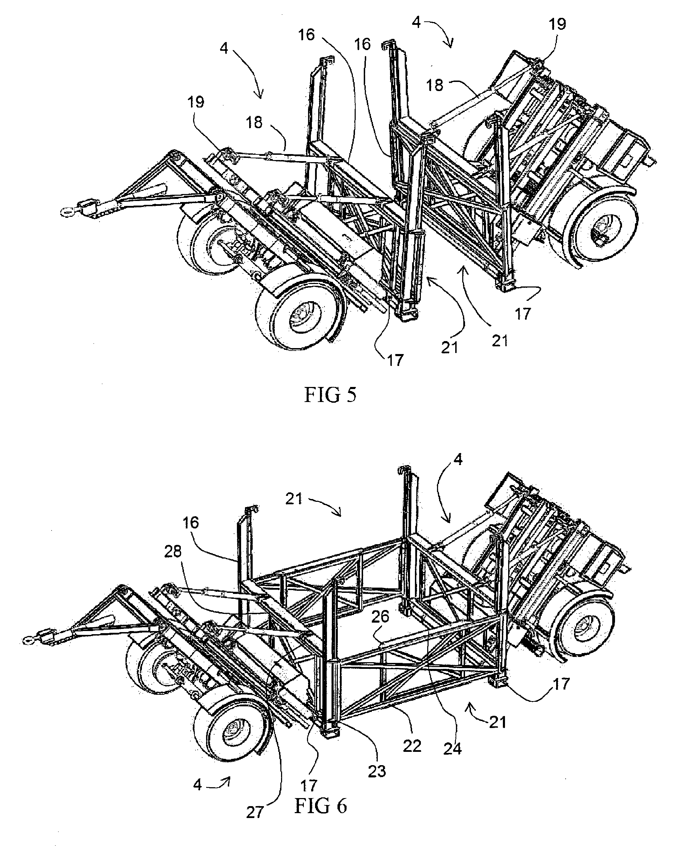

Comme représenté aux figures 5 à 10, chaque dispositif 4 comprend des moyens d'assemblage temporaire 21 mobiles entre la position repliée représentée à la figure 5 et une position déployée représentée aux figures 9 et 10, en passant par différentes étapes intermédiaires représentées aux figures 6 à 8. Les moyens d'assemblage temporaire des deux dispositifs de manutention roulage 4 se complètent mutuellement pour former entre les deux dispositifs une structure de liaison 20 rigide, grâce à laquelle, comme représenté à la figure 10, les deux dispositifs de manutention roulage 4 sont capables de former l'un avec l'autre un ensemble roulant sans conteneur.

Lorsqu'il y a lieu de convoyer les deux dispositifs 4 sans transporter en même temps un conteneur, on place les deux dispositifs 4 face à face, de façon que les deux tabliers 16 soient en regard l'un de l'autre dans une orientation sensiblement verticale, les axes d'articulation 17 étant adjacents au sol, dans la position définie par les roulettes 11, non représentées à la figure 5.

Sur chaque dispositif 4, les moyens d'assemblage temporaire comprennent un cadre latéral 22 qui est articulé à l'un des bords latéraux du tablier 16 suivant un axe d'articulation 23, et des moyens (61) de maintien de ce cadre dans un plan défini, typiquement sensiblement vertical et parallèle à la direction d'avancement. Ces moyens de maintient comprennent un renfort d'angle 24 dont un bord latéral est articulé au cadre latéral 22, suivant un axe d'articulation 26, et un renfort d'angle 27 dont un bord latéral est articulé au tablier 16 suivant un axe d'articulation 28.Les renforts d'angle 24 et 27 sont réalisés sous la forme de cadre. Dans la suite, on appelle « bord mobile » du cadre 22 ou des renforts 24 ou 27, le bord opposé à l'axe d'articulation du cadre 22 ou renfort 24 ou 27 respectivement.

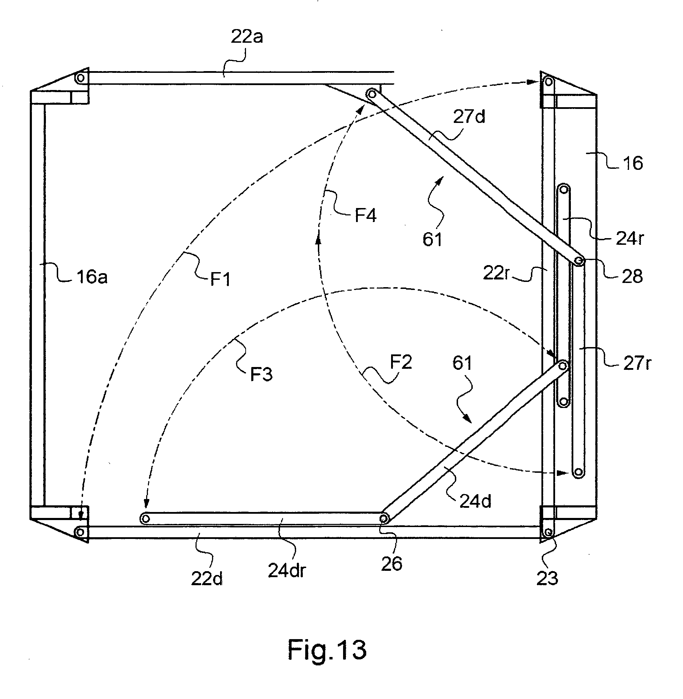

À l'état replié, le renfort 24 est replié contre le côté intérieur du cadre latéral 22 et s'étend en direction opposée à l'axe 23 à partir de l'axe 26. Le renfort 27 est replié contre le tablier 16 et s'étend vers l'axe 23 à partir de l'axe 28. En outre le cadre latéral 22 est replié contre le tablier 16. C'est la situation représentée à la figure 5. Les positions repliées sont également visibles à la figure 13 sous les références 24r, 27r et 22r respectivement. Des verrous libérables non représentés stabilisent ces positions.

La figure 13 illustre schématiquement le déploiement des moyens d'assemblage temporaire à partir des positions 22r, 24r, et 27r. On commence par déployer le cadre latéral 22 de sa position repliée 22r jusqu'à sa position déployée 22d (flèche F1) et on fixe le bord mobile du cadre latéral 22 à un bord latéral du tablier 16a de l'autre dispositif 4. Le renfort 24 toujours replié contre le cadre 22 se trouve maintenant dans la position 24dr.

Ensuite, après avoir déployé d'une manière similaire l'autre cadre latéral 22a, associé à l'autre dispositif 4, on fait pivoter le renfort 27 pour l'écarter de sa position de repos 27r (flèche F2) et dégager la face proximale du tablier 16. On fait passer le renfort 24 de sa position repliée 24dr contre le cadre latéral 22 jusqu'à une position déployée 24d (Flèche F3) dans laquelle on fixe son bord mobile au tablier 16 à une certaine distance des bords latéraux de ce dernier. Puis on termine le déploiement du renfort d'angle 27 (flèche F4) jusqu'à une position déployée 27d dans laquelle on fixe son bord mobile au cadre latéral 22a de l'autre dispositif 4 à une certaine distance des deux bords latéraux de ce dernier. Bien entendu, les opérations qui viennent d'être décrites sont effectuées de façon synchronisée pour les deux dispositifs 4.

Ainsi, comme le montrent les figures 9 et 10, la structure de liaison 20 obtenue a la forme générale d'un parallélépipède à base carrée, définie par les deux tabliers 16 et les deux cadres latéraux 22, dont chacune des arêtes verticales est triangulée par un renfort d'angle respectif 24 ou 27.

Ainsi, chaque cadre latéral 22 est maintenu dans un plan vertical parallèle à la direction d'avancement par un renfort d'angle 24 par rapport au tablier 16 du dispositif 4 auquel le cadre latéral appartient, et par un renfort d'angle 27 par rapport au tablier 16 de l'autre dispositif 4. Chaque dispositif 4 est assemblé à l'autre dispositif 4 par le cadre 22 d'un côté et le renfort 27 de l'autre. Au total, les deux tabliers 16 sont rigidement liés l'un à l'autre, les deux châssis 6 sont liés l'un à l'autre suivant un axe longitudinal commun parallèle à la direction d'avancement du véhicule (lorsque le sous-châssis 12 est lui aussi orienté selon cet axe autour de son articulation directionnelle 13).

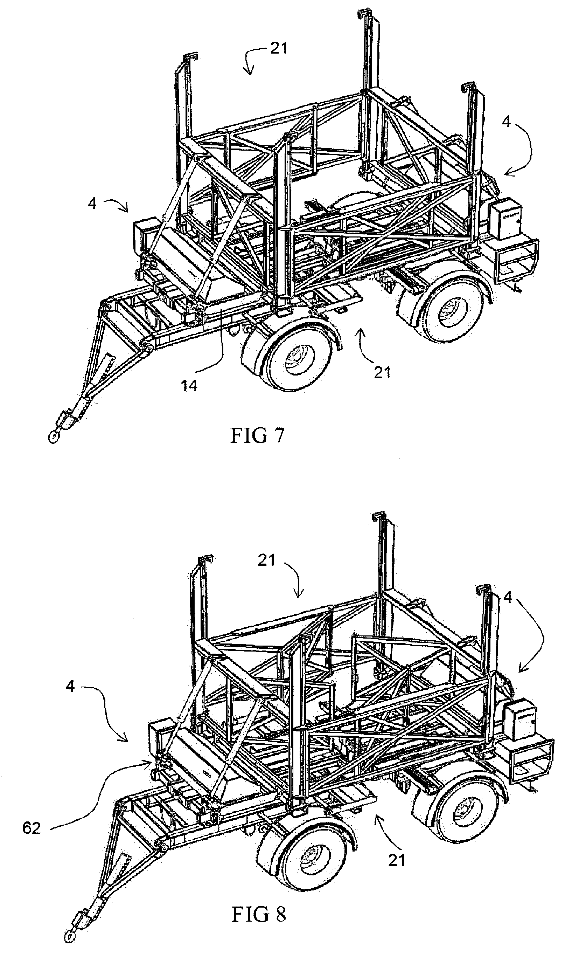

Dans la situation représentée à la figure 6, on a placé les deux dispositifs 4 à distance convenable entre eux, et on a déployé les cadres latéraux 22. Ensuite, comme représenté à la figure 7, on a actionné les chariots pour soulever la structure de liaison 20 comme pour prendre en charge un conteneur, de façon que les deux châssis 6 soient dans des plans horizontaux. On déploie ensuite les renforts d'angle (figure 8) pour aboutir à l'état final de la structure de liaison 20, représenté à la figure 9.

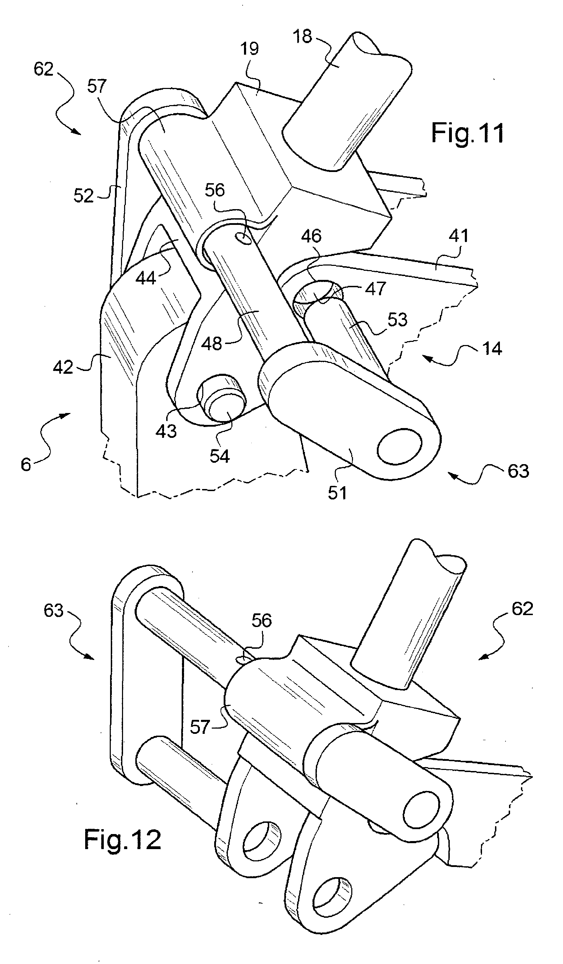

À ce stade, les extrémités distales 19 des vérins 18 de chaque dispositif 4 sont adjacentes à des conformations portées par le chariot 14 et qui permettent d'accoupler les extrémités 19 avec le chariot 14 tout en les détachant du châssis 6. Ce dispositif sera décrit plus en détail plus loin en référence à la figure 11. Grâce à ce dispositif, on détache les extrémités 19 du châssis 6 et on les accouple avec le chariot 14. Ensuite sur chacun des dispositifs 4, on déplace le chariot 14 vers sa position proximale. Le déplacement des deux chariots 14 oblige les deux dispositifs 4 à s'écarter l'un de l'autre le long de la direction d'avancement de l'ensemble roulant, par roulement des roues 7 sur le sol 2. Mais comme l'extrémité distale 19 des vérins 18 est maintenant couplée au chariot 14, le retour des chariots 14 en position proximale ne s'est pas accompagné d'une inclinaison progressive des châssis 6. Au contraire, ceux-ci sont restés horizontaux. Par cette manoeuvre, les axes 8 des deux dispositifs se trouvent nettement de part et d'autre de la structure de liaison 20, qui se trouve donc entièrement située au-dessus de l'empattement de l'ensemble roulant formé par les deux dispositifs 4 reliés entre eux par la structure de liaison 20. On désigne ici par « empattement » l'écartement entre les deux axes 8 des deux dispositifs 4.

Malgré la longueur relativement faible des cadres latéraux 22, typiquement de l'ordre de 2,50 m, la longueur d'empattement de l'ensemble roulant sans conteneur représenté à la figure 10 est suffisamment grande pour respecter les normes applicables aux remorques routières de poids-lourds.

Comme le montrent les figures 11 et 12, l'extrémité distale 19 du vérin 18 est équipée d'un accouplement variable 62 muni d'un coupleur coulissant 63 lui permettant d'être articulée soit à des oreilles 41 du chariot 14, soit à une oreille 42 du châssis 6. Lorsque le chariot 14 se trouve dans sa position distale, un alésage de l'oreille 42 coïncide avec des alésages 43 d'une chape 44 solidaire de l'extrémité 19, et des alésages 46 des oreilles 41 coïncident avec un alésage 47 de l'extrémité 19. Un coulisseau 48 est monté coulissant dans un guidage correspondant 57 de l'extrémité 19 parallèlement à l'axe des alésages. Le coulisseau 48 porte rigidement à chacune de ses extrémités un support 51, 52 auquel est fixé un tourillon respectivement 53, 54. Chaque support 51, 52 sert en même temps de butée définissant l'une des extrémités de la course de coulissement du coulisseau 48. Le tourillon 53 est aligné avec l'alésage 47 et le tourillon 54 est aligné avec les alésages 43 de la chape 44. Ainsi, lorsque le chariot 14 est en position distale, le tourillon 53 est aligné avec les alésages 46 du chariot 14 et simultanément le tourillon 54 est aligné avec l'alésage non représenté de l'oreille 42 du châssis 6. La longueur des tourillons 53 et 54 est telle que lorsque l'un est engagé dans les alésages qui lui correspondent, l'autre est dégagé des alésages qui correspondent à cet autre, et inversement.

Lorsque le chariot est dans sa position distale (cas des Fig. 11 et 12) on peut sélectivement accoupler l'extrémité 19 de chaque vérin 18 avec le châssis 6 ou avec le chariot 14 en faisant simplement coulisser d'une fin de course à l'autre l'équipage mobile constitué par le coulisseau 48, les deux supports 51, 52 et les deux tourillons 53, 54. Il y a dans le coulisseau 48 un perçage 56 qui se trouve d'un côté ou de l'autre du guidage 57 suivant la position donnée à l'équipage mobile. Une fois l'extrémité 19 accouplée comme on le désire avec le châssis 6 ou avec le chariot 14, on place dans le perçage 56 une goupille (non représentée) pour verrouiller l'équipage mobile dans la position choisie.

Bien entendu, l'invention n'est pas limitée aux exemples décrits et représentés, et de nombreux aménagements peuvent être apportés à ces exemples sans sortir du cadre de l'invention.

Les châssis pourraient par exemple porter des longerons télescopiques permettant de les assembler entre eux, au lieu de l'assemblage entre tabliers décrit plus haut.

L'invention a été décrite dans son application à des dispositifs de manutention roulage dont les châssis sont capables de se positionner sous le conteneur à transporter. Toutefois, elle est applicable à des dispositifs de manutention roulage qui restent situés de part et d'autre des faces d'extrémité du conteneur pendant le transport.

## Revendications

1. Procédé pour régler l'empattement d'un ensemble roulant composé d'au moins deux dispositifs de manutention roulage (4), chaque dispositif comportant un châssis (6), et un chariot (14) mobile sur le châssis (6) et associable avec une extrémité (3) d'un conteneur (1) pour former une remorque routière, **caractérisé en ce que** l'on fait coulisser le chariot (14) d'au moins un des dispositifs de manutention roulage (4) le long du châssis (6) de ce dispositif jusqu'à une position déterminée.

2. Procédé selon la revendication 1, **caractérisé en ce que** l'on fait coulisser le chariot (14) sur le châssis (6) parallèlement à la direction d'avancement.

3. Procédé selon la revendication 1 ou 2, **caractérisé en ce que** l'on fait coulisser le chariot (14) entre une position distale le long du châssis (6), dans laquelle les roues (7) sont situées sous le conteneur, et une position proximale le long du châssis (6).

4. Procédé selon l'une des revendications 1 à 3, **caractérisé en ce que** l'on oriente, au moyen d'un vérin (18), des moyens de couplage (60) du dispositif de manutention roulage (4) avec une extrémité (3) du conteneur (1), par rapport au chariot (14) autour d'un axe (17) transversal à la direction d'avancement.

5. Procédé selon la revendication 4, **caractérisé en ce que** les moyens de couplage font partie du chariot, et **en ce qu'**on articule une extrémité (19) du vérin (18) sélectivement au chariot (14) ou au châssis (6), une autre extrémité du vérin (18) étant articulée au chariot.

6. Procédé selon la revendication 5, **caractérisé en ce que** dans une position déterminée du chariot (14) on actionne un dispositif d'accouplement variable (62) permettant dans cette position du chariot, d'accoupler sélectivement ladite extrémité (19) du vérin (18) soit au chariot (14), soit au châssis (6).

7. Procédé selon la revendication 5 ou 6, **caractérisé en ce que** lorsque le vérin est accouplé au châssis on déplace le chariot (14) pour soulever ou descendre un conteneur (1).

8. Procédé selon l'une des revendications 4 à 7, **caractérisé en ce que** pour le réglage de l'empattement les deux extrémités du vérin (18) sont accouplées au chariot (14) et on fait coulisser le chariot (14) sur le châssis (6) à l'aide de moyens moteurs (15).

9. Procédé selon l'une des revendications 1 à 10, **caractérisé en ce qu'**on règle l'empattement à une valeur correspondant à une position intermédiaire du chariot entre ses positions proximales et distales.

10. Procédé selon l'une des revendications 1 à 10, **caractérisé en ce qu'**en l'absence de conteneur on réalise un ensemble roulant sans conteneur en accouplant deux dispositifs de manutention roulage à l'aide de moyens d'assemblage temporaires, et on règle l'empattement de cet ensemble roulant sans conteneur.

## Patentansprüche

1. Verfahren zum Einstellen des Achsabstands einer rollenden Einheit, die mindestens zwei Vorrichtungen (4) zur Rollbeförderung aufweist, wobei jede Vorrichtung ein Fahrgestell (6) und einen auf dem Fahrgestell (6) beweglichen Schlitten (14) enthält, der mit einem Ende (3) eines Containers (1) verbindbar ist, um einen Straßenanhänger zu bilden, **dadurch gekennzeichnet, dass** der Schlitten (14) zumindest einer der Vorrichtungen (4) zur Rollbeförderung entlang des Fahrgestells (6) dieser Vorrichtung bis zu einer bestimmten Position verschoben wird.

2. Verfahren nach Anspruch 1, **dadurch gekennzeichnet, dass** der Schlitten (14) auf dem Fahrgestell (6) parallel zur Fahrtrichtung verschoben wird.

3. Verfahren nach Anspruch 1 oder 2, **dadurch gekennzeichnet, dass** der Schlitten (14) zwischen einer distalen Position entlang des Fahrgestells (6), in welcher die Räder (7) sich unter dem Container befinden, und einer proximalen Position entlang des Fahrgestells (6) verschoben wird.

4. Verfahren nach einem der Ansprüche 1 bis 3, **dadurch gekennzeichnet, dass** Kopplungsmittel (60) zum Koppeln des Rollbeförderungsvorrichtung (4) mit einem Ende (3) des Containers (1) mittels eines Kraftzylinders (18) bezüglich des Schlittens (14) um eine Achse (17) herum ausgerichtet werden, die quer zur Fahrtrichtung verläuft.

5. Verfahren nach Anspruch 4, **dadurch gekennzeichnet, dass** die Kopplungsmittel Teil des Schlittens sind und dass ein Ende (19) des Kraftzylinders (18) selektiv an den Schlitten (14) oder an das Fahrgestell (6) angelenkt wird, wobei ein weiteres Ende des Kraftzylinders (18) an den Schlitten angelenkt ist.

6. Verfahren nach Anspruch 5, **dadurch gekennzeichnet, dass** in einer bestimmten Position des Schlittens (14) eine verstellbare Kupplungsvorrichtung (62) betätigt wird, mit welcher in dieser Position des Schlittens das Ende (19) des Kraftzylinders (18) selektiv entweder an den Schlitten (14) oder an das Fahrgestell (6) gekuppelt werden kann.

7. Verfahren nach Anspruch 5 oder 6, **dadurch gekennzeichnet, dass** dann, wenn der Kraftzylinder an das Fahrgestell gekuppelt ist, der Schlitten (14) verlagert wird, um einen Container (1) anzuheben oder abzusenken.

8. Verfahren nach einem der Ansprüche 4 bis 7, **dadurch gekennzeichnet, dass** zum Einstellen des Achsabstands die beiden Enden des Kraftzylinders (18) an den Schlitten (14) gekuppelt werden und der Schlitten (14) mit Hilfe von Antriebsmitteln (15) auf dem Fahrgestell (6) verschoben wird.

9. Verfahren nach einem der Ansprüche 1 bis 10, **dadurch gekennzeichnet, dass** der Achsabstand auf einen Wert eingestellt wird, der einer Zwischenposition des Schlittens zwischen seiner proximalen und seiner distalen Position entspricht.

10. Verfahren nach einem der Ansprüche 1 bis 10, **dadurch gekennzeichnet, dass** bei fehlendem Container eine rollende Einheit ohne Container geschaffen wird, indem zwei Rollbeförderungsvorrichtungen mit Hilfe von temporären Verbindungsmitteln gekuppelt werden und der Achsabstand dieser rollenden Einheit ohne Container eingestellt wird.

## Claims

1. Method for adjusting the wheelbase of a wheel-mounted assembly comprising at least two wheeled handling devices (4), each device comprising a chassis (6), and a carriage (14) that is mobile on the chassis (6) and able to be combined with one end (3) of a container (1) in order to form a road trailer, **characterized in that** the carriage (14) of at least one of the wheeled handling devices (4) is made to slide along the chassis (6) of this device until reaching a determined position.

2. Method according to claim 1, **characterized in that** the carriage (14) is made to slide on the chassis (6) parallel to the direction of travel.

3. Method according to claim 1 or 2, **characterized in that** the carriage (14) is made to slide between a distal position along the chassis (6), in which the wheels (7) are situated under the container, and a proximal position along the chassis (6).

4. Method according to any one of claims 1 to 3, **characterized in that** a cylinder (18), is used to orient coupling means (60) of the wheeled handling device (4) with one end (3) of the container (1), with respect to the carriage (14) about an axis (17) transverse to the direction of travel.

5. Method according to claim 4, **characterized in that** the coupling means form part of the carriage, and **in that** one end (19) of the cylinder (18) is articulated selectively with the carriage (14) or with the chassis (6), another end of the cylinder (18) being articulated with the carriage.

6. Method according to claim 5, **characterized in that** in a determined position of the carriage (14) a variable coupling device (62) is actuated, making it possible in this position of the carriage to selectively couple said end (19) of the cylinder (18) either to the carriage (14), or to the chassis (6).

7. Method according to claim 5 or 6, **characterized in that** when the cylinder is coupled to the chassis, the carriage (14) is displaced in order to lift or lower a container (1).

8. Method according to any one of claims 4 to 7, **characterized in that** for the adjustment of the wheelbase the two ends of the cylinder (18) are coupled to the carriage (14) and the carriage (14) is made to slide on the chassis (6) using motorized means (15).

9. Method according to any one of claims 1 to 10, **characterized in that** the wheelbase is adjusted to a value corresponding to an intermediate position of the carriage between its proximal and distal positions.

10. Method according to any one of claims 1 to 10, **characterized in that** in the absence of a container a wheel-mounted assembly can be formed without a container by coupling together two wheeled handling devices using temporary assembly means, and the wheelbase of this containerless wheel-mounted assembly can be adjusted.
